# EUROPEAN PATENT SPECIFICATION

(11) **EP 2 214 947 B1**
(45) Date of publication and mention of the grant of the patent: **21.01.2015**
(21) Application number: 08854915.9
(22) Date of filing: 04.11.2008
(51) Int. Cl.: B62B 3/02

(54) **COMBINATION TROLLEY**
KOMBINATIONSWAGEN
CHARIOT COMBINÉ

(30) Priority: 28.11.2007 DK 200701695
(43) Date of publication of application: 11.08.2010
(73) Proprietor: Berendsen A/S, 2300 København S (DK)
(72) Inventor: ANDREASEN, Peter, DK-2970 Hørsholm (DK); EGELUND, Henrik, Guldager, 5250 Odense SV (DK)
(74) Representative: Joergensen, Bjoern Barker
(86) International application number: PCT/DK2008/000391
(87) International publication number: WO 2009/068032

(56) References cited:
- EP-A- 1 243 499
- EP-A- 1 568 581
- EP-A- 1 640 255
- WO-A-95/20514

## Description

The present invention relates to a combination trolley according to claim 1.

WO 95/20514 (Berendsen AB) Is considered as the closest prior art and discloses a motor-driven trolley adapted to be connected to a loading trolley. The motor-driven trolley is provided with a motor-driven wheel located at an operator end of the connected trolleys. The motor-driven wheel is vertically displaceable and pivotal about a vertical axis by means of an operating handle, so that the wheel may optionally engage the floor for motor-driven operation, and so that the travel direction of the connected trolleys may be controlled by the operator. However, for instance by operation in narrow passages, such as in hotels, the operator may encounter difficulties in aligning the connected trolleys along a wall in the loaded state.

US 6,390,213 discloses a manoeuvrable self-propelled cart having a drive assembly including independently suspended drive wheels for propelling the cart. A drive wheel carriage has two drive wheels and is adapted to rotate about a vertical axis. Each drive wheel is independently driven by a drive motor.

WO 2006/059200 discloses a wheeled object of the type adapted to be operated by a walking person and comprising a chassis supported by a plurality of supporting rollers. A motor driven driving device is rotatable about a vertical axis in relation to the chassis so as to change the angular position and the driving direction of the driving wheel in relation to the chassis.

EP 0 281 536 discloses a carriage for handling laundry which is used at hotels, hospitals or the like. The carriage comprises a wheel supported chassis being provided with one or several shelves on which clean articles are transported and delivered from a laundry. The carriage is designed so that it can be used as a cleaning carriage by fastening one or several releasable sections to the carriage, the sections being provided with means for supporting other types of tools and articles for cleaning. The lower part of the releasable sections may be provided with supporting wheels.

The object of the present invention is to provide a combination trolley that is easier to handle.

In view of this object, the combination trolley is characterized in that the at least one motor-driven wheel is located at the coupling end of the first trolley.

Thereby, because the motor-driven wheel is located at the area of connection between the first and the second trolley, the combination trolley may be motor-driven for displacement in direct lateral direction, without the operator needing to interfere by manually directing the trolley. This may be of great advantage, especially when manoeuvring in narrow passages, such as in hotels, as the combination trolley may easily be driven fast forward to its place of destination, and subsequently it may be driven direct laterally until reaching a first wall of the narrow passage, so that a walking area of the narrow passage is kept free between the combination trolley and a second wall of the passage.

In an embodiment, in the interconnected state of the first and second trolleys, the at least one motor-driven wheel is located at a central area of the combination trolley. Thereby, the combination trolley may be motor-driven for displacement even more precisely in direct lateral direction.

In an embodiment, in the interconnected state of the first and second trolleys, the vertical axis, about which the at least one motor-driven wheel is supported pivotally, is located at a distance from a free end of the combination trolley, said distance corresponding to at least 1/3 of the length of the combination trolley, and said distance preferably corresponding to at least approximately 2/5 of the length of the combination trolley. Thereby, operation in lateral displacement mode of the combination trolley may be further optimized.

In an embodiment, the first trolley is provided with a drive unit supported pivotally about a vertical axis and carrying two mutually spaced and coaxially arranged motor-driven wheels. Thereby, better contact between the driving wheels and the underlying supporting surface may be achieved.

In a structurally advantageous embodiment, the motor-driven wheels are driven through a differential gear by means of a first electrical motor, and the drive unit is pivotal about the vertical axis by means of a second electrical motor.

In an embodiment, the first coupling part and the second coupling part are adapted to be interconnected in such a way that the first trolley and the second trolley are substantially prevented from mutual rotation about a vertical axis, but in such a way that a certain mutual displacement between the first and second coupling parts is possible in vertical direction, and in such a way that a certain mutual rotation between the first and second coupling parts is possible about any horizontal axis. Thereby, the combination trolley may be manoeuvred easily due to the fact that it may be handled practically as one trolley, both when travelling in the longitudinal and in the lateral direction, although driving over obstacles, such as thresholds, is at the same time facilitated by possibilities of mutual displacements and rotations between the first trolley and the second trolley.

In a structurally advantageous embodiment, the first coupling part comprises a gripping member adapted to grip about a vertically arranged pin of the second coupling part, and the first coupling part comprises bumpers on either side of the gripping member, the bumpers being so positioned that they may abut corresponding abutment surfaces of the second coupling part in the interconnected state of the first and second trolleys. Thereby, mutual rotation about a vertical axis between the first trolley and the second trolley may practically be avoided, although a certain mutual displacement between the first and second coupling parts may be possible in vertical direction, and a certain mutual rotation between the first and second coupling parts may be possible about any horizontal axis.

In an embodiment, the second coupling part comprises spaced guide rollers having a vertical rotational axis, and the bumpers of the first coupling part have recesses, respectively, adapted to receive the guide rollers of the second coupling part so that the first and second coupling parts are aligned at connection. Thereby, easy connection of the first and the second trolley may be obtained.

In an embodiment, the first coupling part is provided with at least one pushing element adapted to push the second coupling part away from the first coupling part after disconnection of the first and second coupling parts. Thereby, the separation of the first and the second trolley may be facilitated after disconnection of the coupling parts.

In an embodiment, the first trolley, opposite its coupling end, is provided with an activation pedal fixedly arranged on a rotatable spindle, a first end of a swivel arm being fixedly connected to the rotatable spindle, and a second end of the swivel arm engaging a first end of a push rod arranged displaceably in the longitudinal direction of the first trolley, a second end of the push rod acting as the at least one pushing element at the coupling end of the first trolley, and the push rod engaging an activation shaft adapted to release the gripping member of the first coupling part. Thereby, by operation of the activation pedal by means of a foot, firstly the gripping member of the first coupling part may be activated to disconnect the coupling parts, and secondly, the second coupling part may be pushed away from the first coupling part.

In an embodiment, the at least one motor-driven wheel is pivotal about the vertical axis between a position for longitudinal driving and a position for lateral driving of the combination trolley, and the at least one motor-driven wheel is adapted to be fixed in the position for longitudinal driving in the disconnected state of the first and second trolleys. Thereby, the first trolley may be maintained stable in its disconnected state, even if no other wheels than the drive wheel or wheels are provided at the coupling end.

The invention will now be explained in more detail below by means of examples of embodiments with reference to the schematic drawing, in which
Figs. 1 and 2 are perspective views, seen from above, of a combination trolley according to the invention, in the interconnected state and in the disconnected state, respectively,

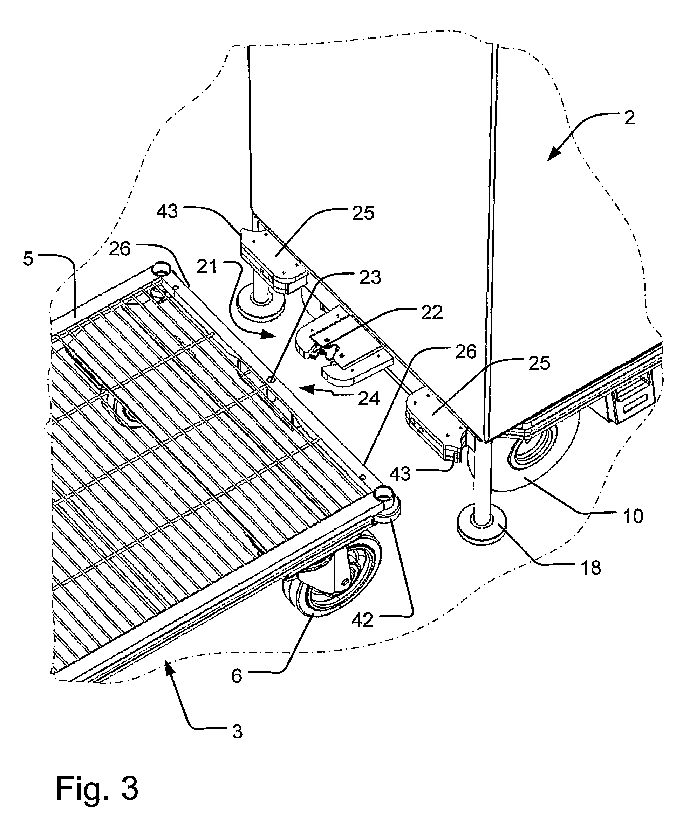

Fig. 3 shows a detail of the combination trolley in Fig. 2,

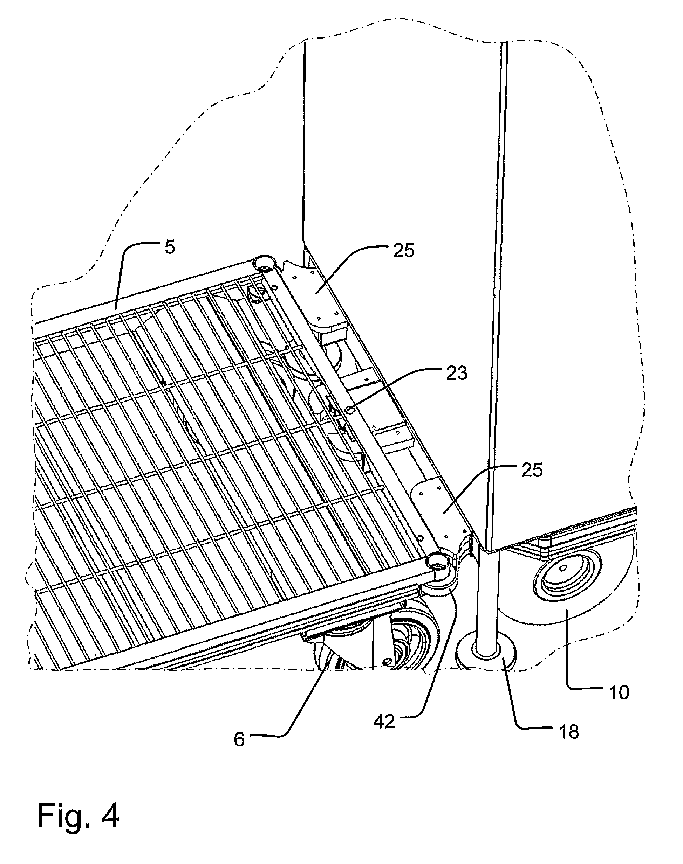

Fig. 4 shows a detail of the combination trolley in Fig. 1,

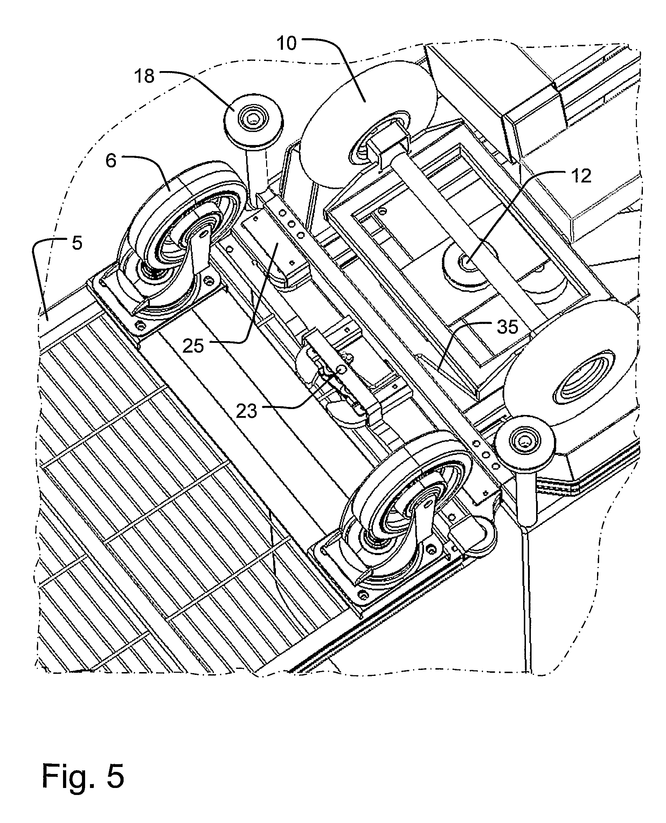

Fig. 5 shows a detail of the combination trolley in Fig. 1, seen from below,

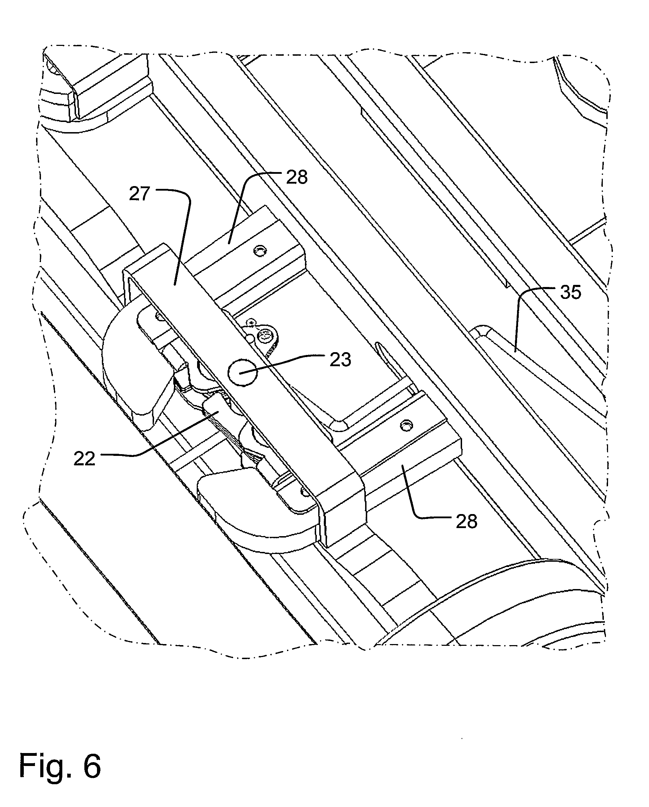

Fig. 6 shows, on a larger scale, a detail of the view of Fig. 5,
Figs. 7 to 9 show, seen from below, a detail showing a first coupling part of the first trolley of the combination trolley in Figs. 1 and 2, in three different stages of operation,
Fig. 10 shows a part of the first trolley of the combination trolley in Figs. 1 and 2, seen from below,
Fig. 11 shows components of the first coupling part of the first trolley of the combination trolley in Figs. 1 and 2,
Figs. 12 and 13 are perspective views, seen from below, of the combination trolley in Figs. 1 and 2,
Figs. 14 and 15 are perspective views, seen from below, of the first trolley of the combination trolley in Figs. 1 and 2, in different stages of operation.

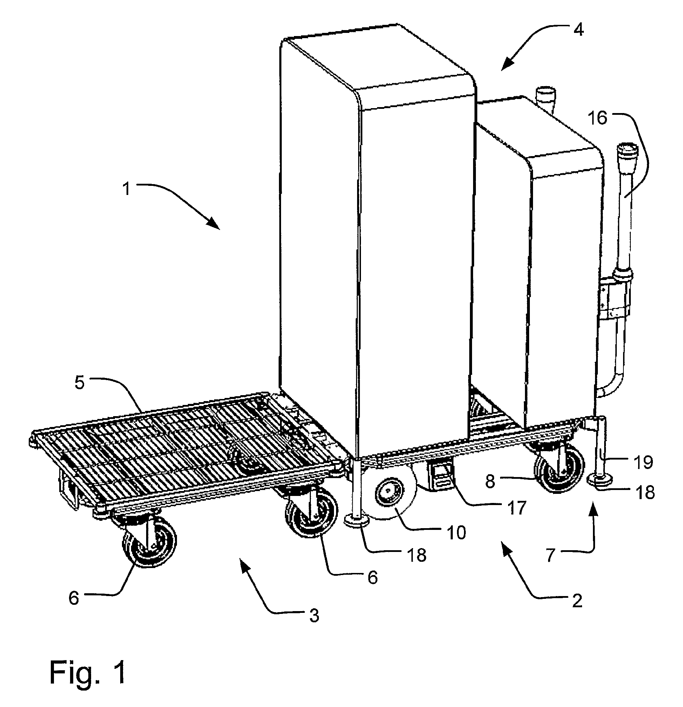

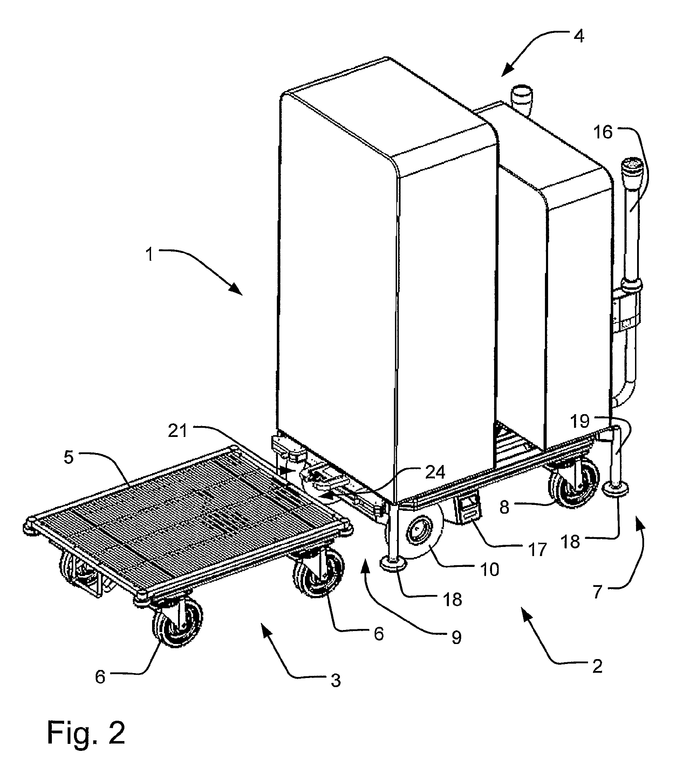

Fig. 1 and 2 show a combination trolley 1, according to the invention, comprising a first trolley 2 and a second trolley 3. The combination trolley 1 may for instance be employed in a hotel, whereby the first trolley 2 may be specially adapted to contain either cleaning utensils or consumer goods such as drinks, snacks, soap, shampoo, etc., and whereby the second trolley 3 may be designed as a laundry trolley, either for clean or used laundry. It is shown only schematic that the first trolley 2 may comprise a housing 4 for storage of the cleaning utensils or the consumer goods. The housing 4 may have every suitable configuration according to the specific intended use. In the figures, only a chassis 5 of the second trolley 3 is shown. However, the second trolley 3 may typically have side walls comprising a grid made up by threads extending between pipes or the like defining the edges of the walls. Furthermore, the second trolley 3 may comprise a number of shelves for carrying laundry or linen, the shelves likewise being composed by a grid made up by threads extending between pipes.

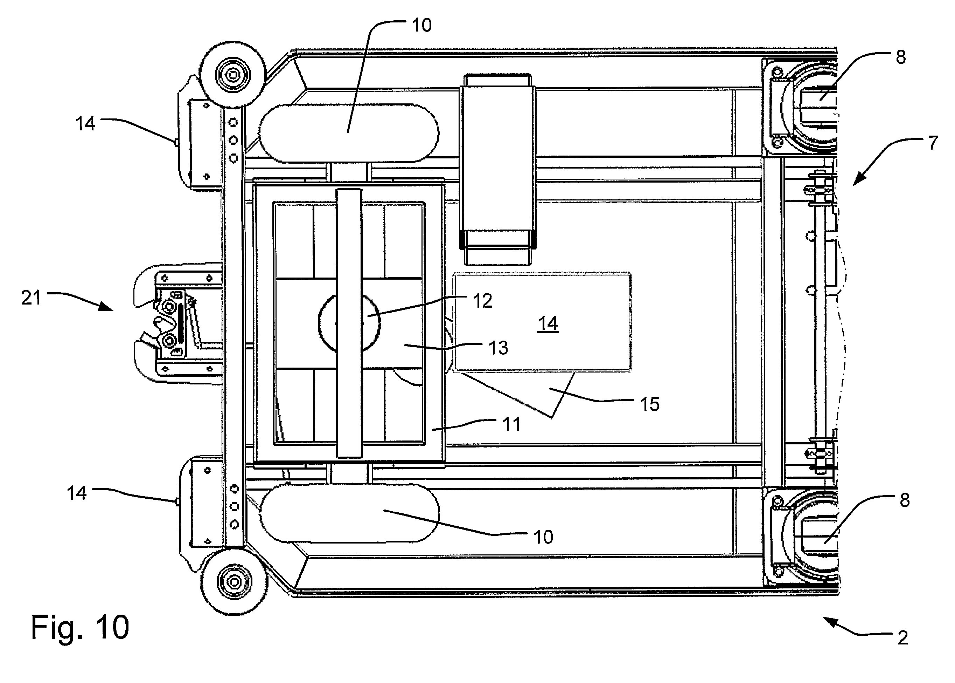

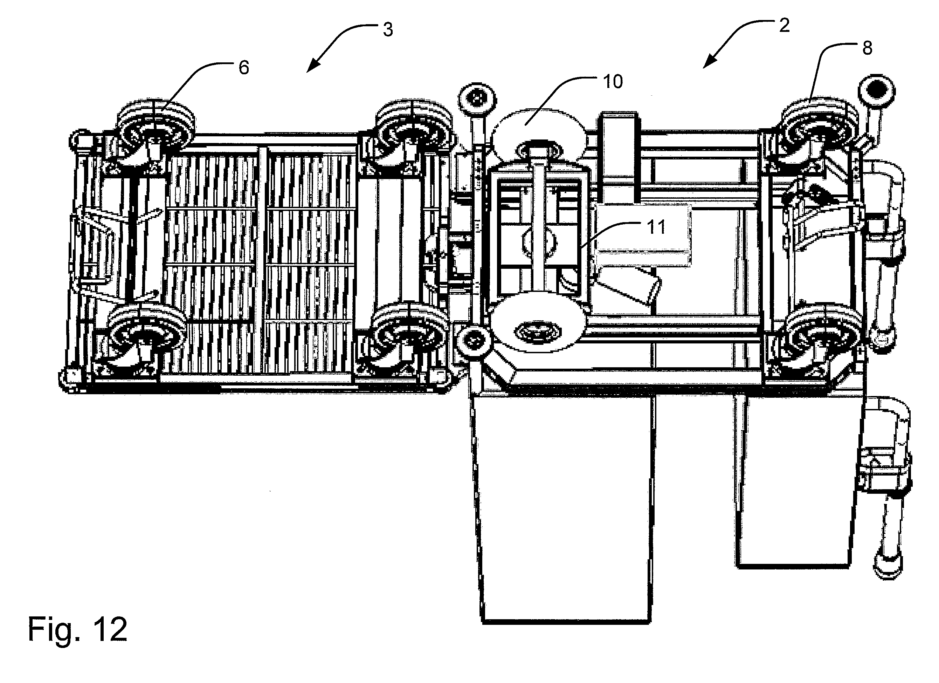

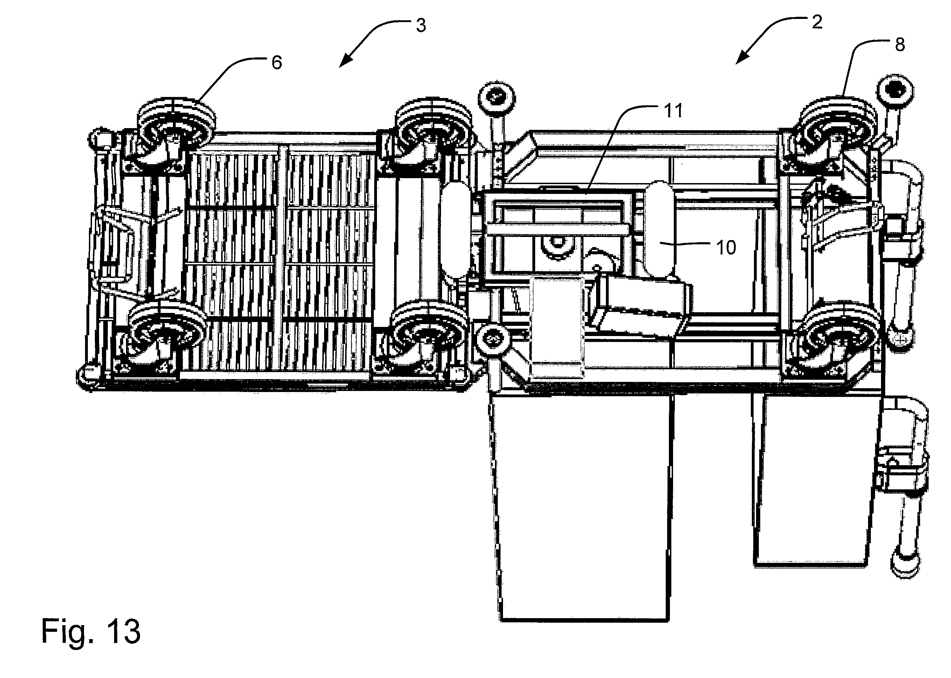

The second trolley 3 is supported by four caster wheels and may in the disconnected state of the combination trolley, shown in Fig. 2, be handled freely by an operator by gripping it at the not shown walls and pushing or pulling it around. Of course, the second trolley 3 may be supported by any other suitable number of caster wheels, such as for instance three or more than four. The first trolley 2 is, at an operator end 7, provided with two caster wheels 8 and is, at a coupling end 9 opposite the operator end 7, provided with two motor-driven wheels 10. Of course, the first trolley 2 may be supported by any other suitable number of caster wheels, such as for instance one or more than two. As it may be seen in Fig. 10, the motor-driven wheels 10 are coaxially arranged and spaced at a distance corresponding approximately to the distance between the castor wheels 8 at the operator end 7; however, the distance between the motor-driven wheels 10 may be different, if appropriate. The motor-driven wheels 10 are carried by a drive unit 11 supported by a bearing 12, so that the drive unit 11 is pivotal about a vertical axis. The motor-driven wheels 10 are driven through a differential gear 13 by means of a first electrical motor 14. The drive unit 11 may be pivoted about the vertical axis by means of a second electrical motor 15, whereby the motor-driven wheels 10 may either be aligned with the longitudinal direction of the combination trolley 1 for travel in the longitudinal direction, see Fig. 12, or be aligned with the lateral direction of the combination trolley 1 for travel in the lateral direction, see Fig. 13. The drive unit 11 may carry any other suitable number of motor-driven wheels 10 than two, such as one or three.

The first electrical motor 14 and the second electrical motor 15 may be controlled by means of a computer, and the control signals for driving speed and direction may be supplied by appropriate controls arranged at the operator end 7, possibly arranged on an operator handle 16. The first trolley 2 may, for the sake of stability, be so controlled that, in the disconnected state of the combination trolley 1, the drive unit 11 is not allowed to swing to the position for travel in the lateral direction. The electrical energy for the electrical motors 14, 15 may be supplied by means of a rechargeable battery pack 17 arranged under the first trolley 2. In order to avoid scratching the walls when driving for instance in a hotel room, the first trolley 2 is at each corner provided with bumper rollers 18 arranged at the lower end of a rod 19, in a position just above the floor.

The first trolley 2 is, at its coupling end 9, provided with a first coupling part 21 comprising a gripping member 22 adapted to grip about a vertically arranged pin 23 of the second coupling part 24 arranged on the second trolley 3. Furthermore, the first coupling part 21 comprises bumpers 25 on either side of the gripping member 22, the bumpers 25 being so positioned that they may abut corresponding abutment surfaces 26 of the second coupling part 24 in the interconnected state of the first and second trolleys 2, 3. The bumpers 25 may for instance be made from hard plastics or the like.

The second coupling part 24 further comprises spaced guide rollers 42 having a vertical rotational axis, and the bumpers 25 of the first coupling part 21 have recesses 43, respectively, adapted to receive the guide rollers 42 of the second coupling part 24 so that the first and second coupling parts 21, 24 are aligned at connection.

The vertically arranged pin 23 of the second coupling part 24 extends between the chassis 5 of the second trolley 3 and a hoop 27, each end of which is mounted on the chassis 5. The gripping member 22 is arranged between a pair of guide members 28, for instance made of plastics, adapted to slide into the hoop 27 at connection of the first and second coupling parts 21, 24.

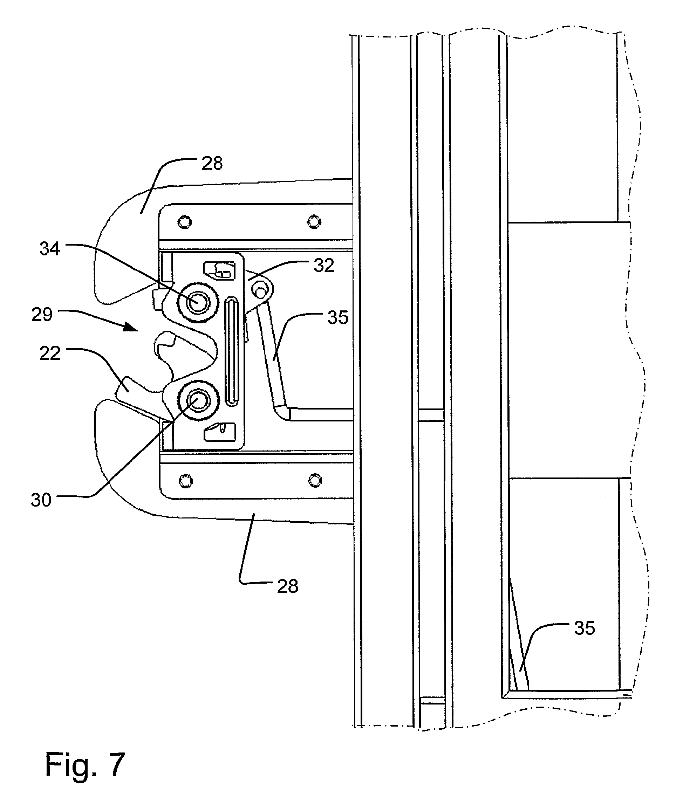

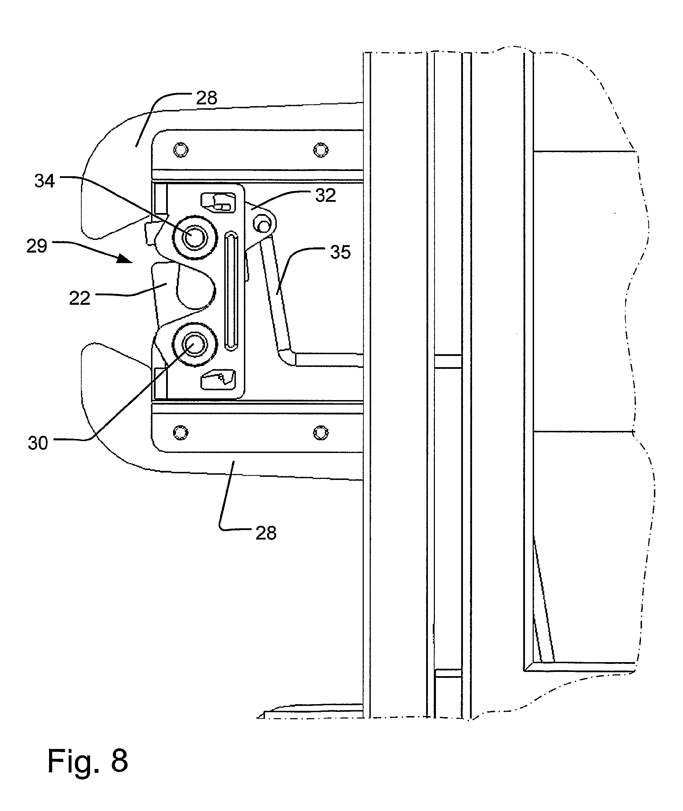

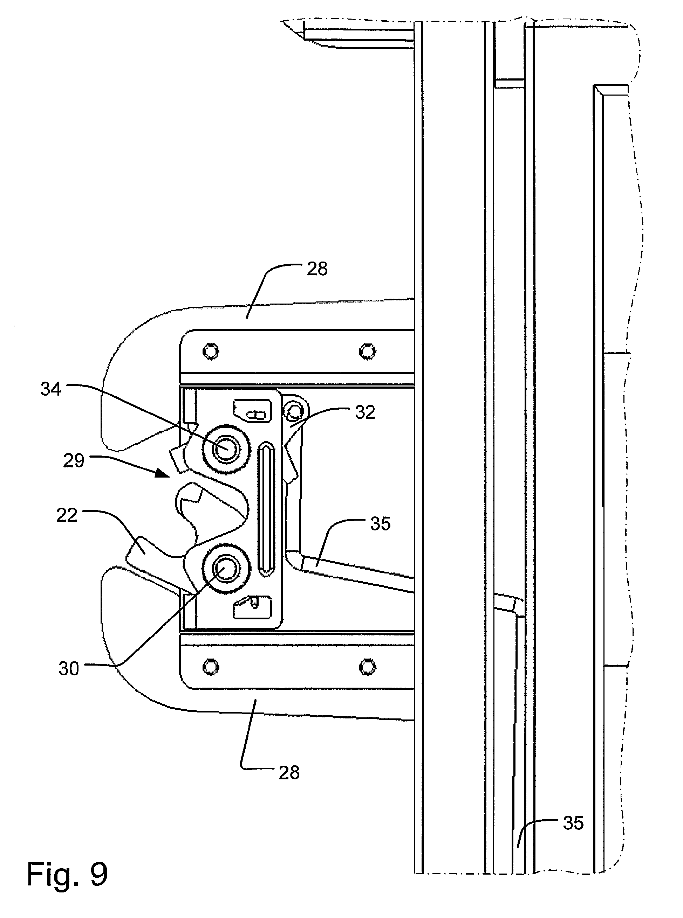

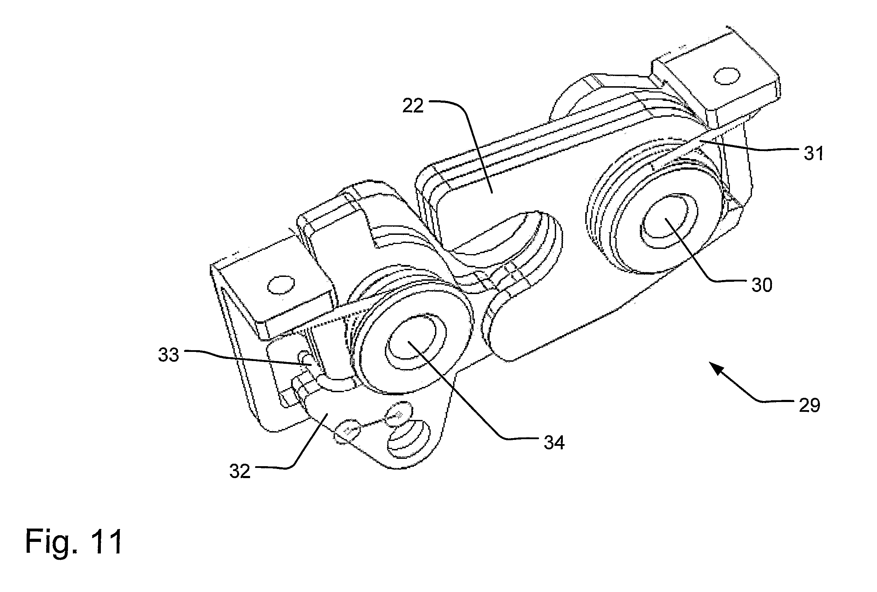

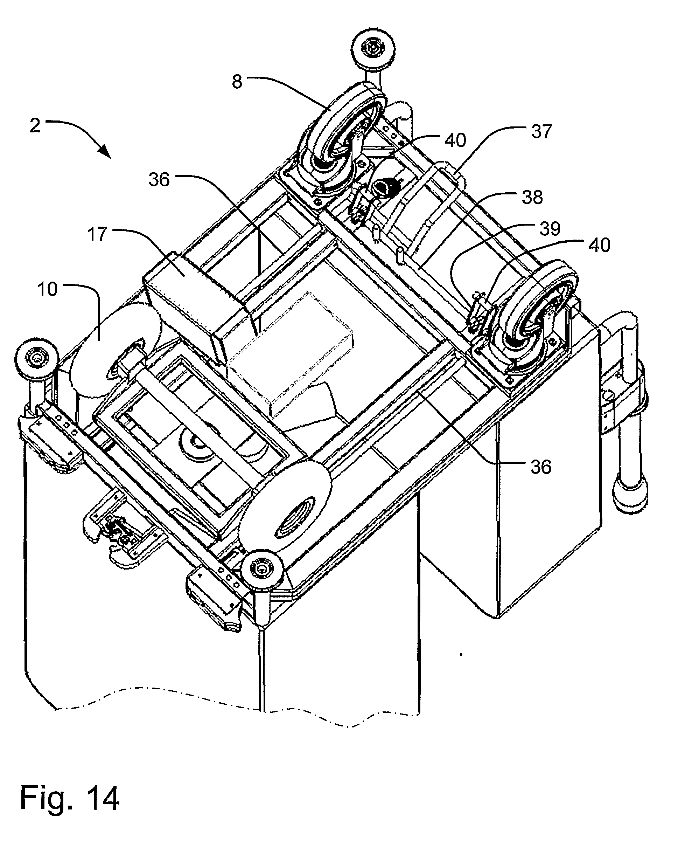

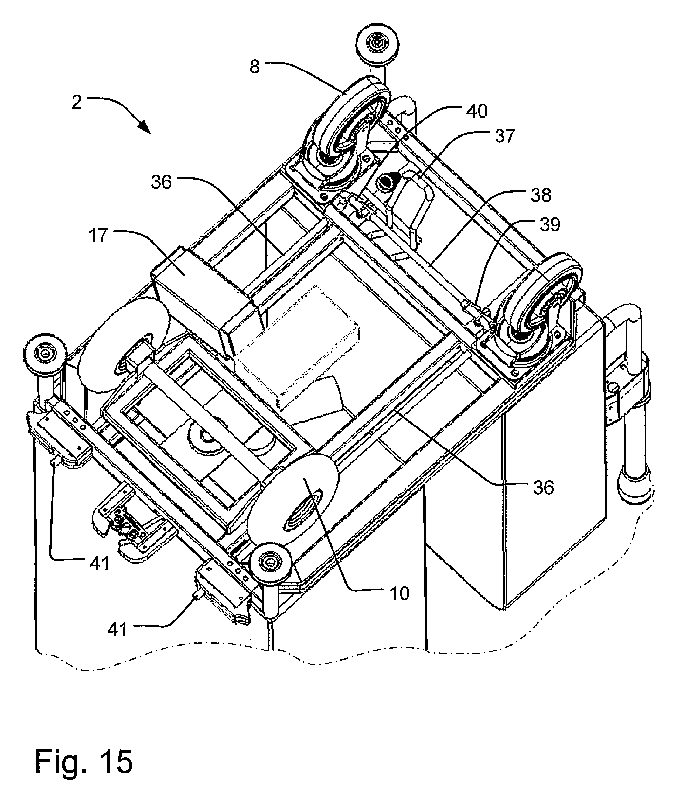

The gripping member 22 may be comprised by a standard gripping mechanism 29, such as for instance available from Southco (registered trademark), see Fig. 11. The gripping member 22 is pivotally arranged in the gripping mechanism 29 about a pin 30 and biased towards its closed position shown in Fig. 11 by means of a first spring 31. The gripping member 22 is maintained in the closed position by engagement of an activation element 32 that is pivotal about a pin 34 and is biased towards the position shown in Fig. 11 by means of a second spring 33. The gripping member 22 is in Fig. 7 shown in its position open for engagement with the pin 23 of the second coupling part 24, in Fig. 8 it is shown pressed into its closed position by engagement with the pin 23 (however, the pin 23 is not shown in the figure), and in Fig. 9 it is shown in its open position for releasement of the pin 23. The gripping member 22 is brought into its open position by rotation of the activation element 32 clockwise as seen in Fig. 11, against the spring load, whereby the gripping member 22 is released by the activation element 32. The activation element 32 is rotated by means of an activation shaft 35 engaging a push rod 36 displaceable in the longitudinal direction of the first trolley 2, see Figs. 14 and 15. The push rod 36 may be displaced by means of an activation pedal 37 fixedly arranged on a rotatable spindle 38, in that a first end of a swivel arm 39 is fixedly connected to the rotatable spindle 38, and a second end of the swivel arm engages a first end 40 of the push rod 36. A second end 41 of the push rod 36 acts as pushing element at the coupling end 9 of the first trolley 2.

Although a certain configuration has been described in the above, the first coupling part 21 and the second coupling part 24 may be of any other type suitable for appropriate connection of the first and second trolleys 2, 3.

The first trolley 2 and the second trolley 3 are, in their connected state, preferably substantially prevented from mutual rotation about a vertical axis, that is, in practice, for instance at maximum approximately 1 degree of rotation, as a result of the elasticity of the bumpers 25.

In order to connect the first trolley 2 with the second trolley 3, the first trolley 2 is simply driven against the second trolley 3, whereby the gripping member 22 automatically grips about the vertically arranged pin 23 of the second coupling part 24 arranged on the second trolley 3. In order to disconnect the first trolley 2 from the second trolley 3, the activation pedal 37 is pressed downward by a foot, whereby firstly, the gripping member 22 releases the vertically arranged pin 23, and secondly, the second end 41 of the push rod 36 pushes the second coupling part 24 away from the first coupling part 21, thereby facilitating separation of the trolleys.

The bearing 12 defining the vertical axis, about which the drive unit 11 is pivotal, is preferably located at a central area of the combination trolley 1, whereby the general capabilities of the combination trolley 1 of driving in lateral direction may be optimized, due to better equalization of the lateral driving forces in the longitudinal direction of the combination trolley 1. As a suitable solution, the bearing 12, and thereby the drive unit 11, may be positioned at a distance from a free end of the combination trolley corresponding to for instance at least 1/3 or at least approximately 2/5 of the total length of the combination trolley. The bearing 12 may even be positioned at a distance from a free end of the combination trolley corresponding to approximately 1/2 of the total length of the combination trolley. The total length of the combination trolley may be defined as the distance between the most distant wheels of the combination trolley or the distance between the most distant ends of the combination trolley, and said distance from a free end may be defined as a distance from wheels located at said free end or as a distance from the most extreme part of that end.

## Claims

1. A combination trolley (1) comprising a first trolley (2) provided with a first coupling part (21) at a coupling end (9) and a second trolley (3) provided with a second coupling part (24) at a coupling end, the first and second coupling parts being interconnectable, the first and second trolleys being supported by caster wheels (6, 8), and the first trolley being adapted to be driven by at least one motor-driven wheel (10) supported pivotally about a vertical axis (12), **characterized in that** the at least one motor-driven wheel (10) is located at the coupling end (9) of the first trolley (2).

2. A combination trolley according to claim 1, wherein, in the interconnected state of the first and second trolleys (2, 3), the at least one motor-driven wheel (10) is located at a central area of the combination trolley (1).

3. A combination trolley according to claim 1 or 2, wherein, in the interconnected state of the first and second trolleys (2, 3), the vertical axis (12), about which the at least one motor-driven wheel (10) is supported pivotally, is located at a distance from a free end of the combination trolley (1), said distance corresponding to at least 1/3 of the length of the combination trolley, and said distance preferably corresponding to at least approximately 2/5 of the length of the combination trolley.

4. A combination trolley according to any one of the preceding claims, wherein the first trolley (2) is provided with a drive unit (11) supported pivotally about a vertical axis (12) and carrying two mutually spaced and coaxially arranged motor-driven wheels (10).

5. A combination trolley according to claim 4, wherein the motor-driven wheels (10) are driven through a differential gear (13) by means of a first electrical motor (14), and wherein the drive unit (11) is pivotal about the vertical axis (12) by means of a second electrical motor (15).

6. A combination trolley according to any one of the preceding claims, wherein the first coupling part (21) and the second coupling part (24) are adapted to be interconnected in such a way that the first trolley (2) and the second trolley (3) are substantially prevented from mutual rotation about a vertical axis, but in such a way that a certain mutual displacement between the first and second coupling parts is possible in vertical direction, and in such a way that a certain mutual rotation between the first and second coupling parts (21, 24) is possible about any horizontal axis.

7. A combination trolley according to any one of the preceding claims, wherein the first coupling part (21) comprises a gripping member (22) adapted to grip about a vertically arranged pin (23) of the second coupling part (24), and wherein the first coupling part comprises bumpers (25) on either side of the gripping member, the bumpers being so positioned that they may abut corresponding abutment surfaces (26) of the second coupling part in the interconnected state of the first and second trolleys (2, 3).

8. A combination trolley according to claim 7, wherein the second coupling part (24) comprises spaced guide rollers (42) having a vertical rotational axis, and wherein the bumpers (25) of the first coupling part (21) have recesses (43), respectively, adapted to receive the guide rollers of the second coupling part so that the first and second coupling parts are aligned at connection.

9. A combination trolley according to any one of the preceding claims, wherein the first coupling part (21) is provided with at least one pushing element (41) adapted to push the second coupling part (24) away from the first coupling part after disconnection of the first and second coupling parts.

10. A combination trolley according to claim 9, wherein the first trolley, opposite its coupling end (9), is provided with an activation pedal (37) fixedly arranged on a rotatable spindle (38), a first end of a swivel arm (39) being fixedly connected to the rotatable spindle, and a second end of the swivel arm engaging a first end (40) of a push rod (36) arranged displaceably in the longitudinal direction of the first trolley (2), a second end (41) of the push rod acting as the at least one pushing element at the coupling end (9) of the first trolley (2), and the push rod engaging an activation shaft (35) adapted to release the gripping member (22) of the first coupling part (21).

11. A combination trolley according to any one of the preceding claims, wherein the at least one motor-driven wheel (10) is pivotal about the vertical axis (12) between a position for longitudinal driving and a position for lateral driving of the combination trolley (1), and wherein the at least one motor-driven wheel is adapted to be fixed in the position for longitudinal driving in the disconnected state of the first and second trolleys (2, 3).

## Patentansprüche

1. Kombinationswagen (1), aufweisend einen ersten Wagen (2), der mit einem ersten Kupplungsteil (21) an einem Kupplungsende (9) versehen ist, und einen zweiten Wagen (3), der mit einem zweiten Kupplungsteil (24) an einem Kupplungsende versehen ist, wobei das erste und zweite Kupplungsteil austauschbar sind, wobei der erste und zweite Wagen durch Laufräder (6, 8) gestützt sind und der erste Wagen dazu geeignet ist, durch mindestens ein motorbetriebenes Rad (10) angetrieben zu werden, das schwenkbar um eine Vertikalachse (12) gestützt ist, **dadurch gekennzeichnet, dass** sich das mindestens eine motorbetriebene Rad (10) am Kupplungsende (9) des ersten Wagens (2) befindet.

2. Kombinationswagen nach Anspruch 1, wobei sich das mindestens eine motorbetriebene Rad (10) im miteinander verbundenen Zustand des ersten und zweiten Wagens (2, 3) in einem zentralen Bereich des Kombinationswagens (1) befindet.

3. Kombinationswagen nach einem der Ansprüche 1 oder 2, wobei sich die Vertikalachse (12), um die das mindestens eine motorbetriebene Rad (10) schwenkbar gestützt ist, im miteinander verbundenen Zustand des ersten und zweiten Wagens (2, 3) in einem Abstand zu einem freien Ende des Kombinationswagens (1) befindet, wobei der Abstand mindestens einem Drittel der Länge des Kombinationswagens entspricht, und wobei der Abstand vorzugsweise mindestens ungefähr zwei Fünfteln der Länge des Kombinationswagens entspricht.

4. Kombinationswagen nach einem der vorhergehenden Ansprüche, wobei der erste Wagen (2) mit einer Antriebseinheit (11) versehen ist, die um eine Vertikalachse (12) schwenkbar gestützt ist und zwei zueinander beabstandete und koaxial angeordnete motorbetriebene Räder (10) trägt.

5. Kombinationswagen nach Anspruch 4, wobei die motorbetriebenen Räder (10) über ein Differentialgetriebe (13) mithilfe eines ersten Elektromotors (14) angetrieben sind, und wobei die Antriebseinheit (11) mithilfe eines zweiten Elektromotors (15) um die Vertikalachse (12) schwenkbar ist.

6. Kombinationswagen nach einem der vorhergehenden Ansprüche, wobei das erste Kupplungsteil (21) und das zweite Kupplungsteil (24) dazu geeignet sind, derart miteinander verbunden zu sein, dass Drehung des ersten Wagens (2) und des zweiten Wagens (3) zueinander um eine Vertikalachse im Wesentlichen verhindert ist, jedoch derart, dass eine bestimmte Verschiebung zueinander zwischen dem ersten und zweiten Kupplungsteil in einer vertikalen Richtung möglich ist, und derart, dass eine bestimmte Drehung zueinander zwischen dem ersten und zweiten Kupplungsteil (21, 24) um jede Horizontalachse möglich ist.

7. Kombinationswagen nach einem der vorhergehenden Ansprüche, wobei das erste Kupplungsteil (21) ein Greifglied (22) aufweist, das zum Greifen um einen vertikal angeordneten Zapfen (23) des zweiten Kupplungsteils (24) geeignet ist, und wobei das erste Kupplungsteil auf beiden Seiten des Greifglieds Stoßfänger (25) aufweist, wobei die Stoßfänger derart angeordnet sind, dass sie im miteinander verbundenen Zustand des ersten und zweiten Wagens (2, 3) an entsprechenden Angrenzflächen (26) des zweiten Kupplungsteils angrenzen können.

8. Kombinationswagen nach Anspruch 7, wobei das zweite Kupplungsteil (24) beabstandete Führungsrollen (42) mit einer vertikalen Drehachse aufweisen, und wobei die Stoßfänger (25) des ersten Kupplungsteils (21) jeweils Aussparungen (43) aufweisen, die zum derartigen Aufnehmen der Führungsrollen des zweiten Kupplungsteils geeignet sind, dass das erste und zweite Kupplungsteil bei Verbindung ausgerichtet sind.

9. Kombinationswagen nach einem der vorhergehenden Ansprüche, wobei das erste Kupplungsteil (21) mit mindestens einem Schiebeelement (41) versehen ist, das zum Wegschieben des zweiten Kupplungsteils (24) vom ersten Kupplungsteil nach der Trennung des ersten und zweiten Kupplungsteils geeignet ist.

10. Kombinationswagen nach Anspruch 9, wobei der erste Wagen gegenüber seinem Kupplungsende (9) mit einem Betätigungspedal (37) versehen ist, das starr an einer Drehspindel (38) angeordnet ist, wobei ein erstes Ende eines Schwenkarms (39) starr mit der Drehspindel verbunden ist, und ein zweites Ende des Schwenkarms ein erstes Ende (40) einer Schubstange (36) in Eingriff nimmt, die verschiebbar in der Längsrichtung des ersten Wagens (2) angeordnet ist, wobei ein zweites Ende (41) der Schubstange als das mindestens eine Schiebeelement am Kupplungsende (9) des ersten Wagens (2) wirkt und die Schubstange eine Betätigungswelle (35) in Eingriff nimmt, die zum Freigeben des Greifglieds (22) des ersten Kupplungsteils (21) geeignet ist.

11. Kombinationswagen nach einem der vorhergehenden Ansprüche, wobei das mindestens eine motorbetriebene Rad (10) zwischen einer Position zum Antrieb in Längsrichtung und einer Position zum Antrieb in Seitenrichtung des Kombinationswagens (1) um die Vertikalachse schwenkbar ist, und wobei das mindestens eine motorbetriebene Rad dazu geeignet ist, in der Position zum Antrieb in Längsrichtung im getrennten Zustand des ersten und zweiten Wagens (2, 3) festgestellt zu werden.

## Revendications

1. Chariot combiné (1) comprenant un premier chariot (2) pourvu d'une première partie de couplage (21) à une extrémité de couplage (9) et un deuxième chariot (3) pourvu d'une deuxième partie de couplage (24) à une extrémité de couplage, les première et deuxième parties de couplage étant interconnectables, les premier et deuxième chariots étant supportés par des roues pivotantes (6, 8), et le premier chariot étant adapté pour être entraîné par au moins une roue entraînée par moteur (10) qui est supportée de façon pivotante autour d'un axe vertical (12), caractérisé en ce ladite au moins une roue entraînée par moteur (10) est située à l'extrémité de couplage (9) du premier chariot (2).

2. Chariot combiné selon la revendication 1, dans lequel, dans l'état interconnecté des premier et deuxième chariots (2, 3), ladite au moins une roue entraînée par moteur (10) est située à une région centrale du chariot combiné (1).

3. Chariot combiné selon la revendication 1 ou 2, dans lequel, dans l'état interconnecté des premier et deuxième chariots (2, 3), l'axe vertical (12) autour duquel ladite au moins une roue entraînée par moteur (10) est supportée de façon pivotante, est situé à une distance d'une extrémité libre du chariot combiné (1), ladite distance correspondant à au moins 1/3 de la longueur du chariot combiné, et ladite distance correspondant de préférence à au moins approximativement 2/5 de la longueur du chariot combiné.

4. Chariot combiné selon l'une quelconque des revendications précédentes, dans lequel le premier chariot (2) est pourvu d'une unité de commande (11) qui est supportée de façon pivotante autour d'un axe vertical (12) et qui porte deux roues (10) entraînées par moteur agencées coaxialement et mutuellement espacées.

5. Chariot combiné selon la revendication 4, dans lequel les roues entraînées par moteur (10) sont entraînées par l'intermédiaire d'un engrenage différentiel (13) au moyen d'un premier moteur électrique (14), et dans lequel l'unité de commande (11) pivote autour de l'axe vertical (12) au moyen d'un deuxième moteur électrique (15).

6. Chariot combiné selon l'une quelconque des revendications précédentes, dans lequel la première partie de couplage (21) et la deuxième partie de couplage (24) sont adaptées pour être interconnectées de telle sorte que le premier chariot (2) et le deuxième chariot (3) soient sensiblement empêchés d'effectuer une rotation mutuelle autour d'un axe vertical, mais de telle sorte qu'un certain déplacement mutuel entre les première et deuxième parties de couplage soit possible dans une direction verticale, et de telle sorte qu'une certaine rotation mutuelle entre les première et deuxième parties de couplage (21, 24) soit possible autour de tout axe horizontal.

7. Chariot combiné selon l'une quelconque des revendications précédentes, dans lequel la première partie de couplage (21) comprend un élément de saisie (22) apte à s'adapter autour d'une broche agencée verticalement (23) de la deuxième partie de couplage (24), et dans lequel la première partie de couplage comprend des butoirs (25) sur les deux côtés de l'élément de saisie, les butoirs étant positionnés de telle sorte qu'ils puissent buter contre des surfaces de butées correspondantes (26) de la deuxième partie de couplage à l'état interconnecté des premier et deuxième chariots (2, 3).

8. Chariot combiné selon la revendication 7, dans lequel la deuxième partie de couplage (24) comprend des galets de guidage espacés (42) qui présentent un axe de rotation vertical, et dans lequel les butoirs (25) de la première partie de couplage (21) comportent des évidements (43), respectivement, adaptés pour recevoir les galets de guidage de la deuxième partie de couplage, de telle sorte que les première et deuxième parties de couplage soient alignées à la connexion.

9. Chariot combiné selon l'une quelconque des revendications précédentes, dans lequel la première partie de couplage (21) est pourvue d'au moins un élément de poussée (41) qui est adapté pour pousser la deuxième partie de couplage (24) à l'écart de la première partie de couplage après la déconnexion des première et deuxième parties de couplage.

10. Chariot combiné selon la revendication 9, dans lequel le premier chariot, à l'opposé de son extrémité de couplage (9), est pourvu d'une pédale d'activation (37) qui est agencée fixement sur une fusée rotative (38), une première extrémité d'un bras pivotant (39) étant connectée fixement à la fusée rotative, et une deuxième extrémité du bras pivotant engageant une première extrémité (40) d'une tige de poussée (36) agencée de façon déplaçable dans la direction longitudinale du premier chariot (2), une deuxième extrémité (41) de la tige de poussée agissant comme ledit au moins un élément de poussée à l'extrémité de couplage (9) du premier chariot (2), et la tige de poussée engageant un arbre d'activation (35) adapté pour relâcher l'élément de saisie (22) de la première partie de couplage (21).

11. Chariot combiné selon l'une quelconque des revendications précédentes, dans lequel ladite au moins une roue entraînée par moteur (10) pivote autour de l'axe vertical (12) entre une position pour un entraînement longitudinal et une position pour un entraînement latéral du chariot combiné (1), et dans lequel ladite au moins une roue entraînée par moteur est adaptée pour être fixée dans la position pour un entraînement longitudinal à l'état déconnecté des premier et deuxième chariots (2, 3).
